# EUROPEAN PATENT APPLICATION

(11) **EP 0 597 188 A2**
(43) Date of publication of application: **18.05.1994**
(21) Application number: 93112440.8
(22) Date of filing: 03.08.1993
(51) Int. Cl.: G11B 19/20, G11B 25/04

(54) **Low profile hard disk assembly for a hard disk drive**

(30) Priority: 13.11.1992 US 975759
(71) Applicant: Hewlett-Packard Company, Palo Alto, California 94304 (US)
(72) Inventor: McAllister, Jeffrey S., Boise , Idaho 83704 (US)
(74) Representative: Baillie, Iain Cameron

(57) **Abstract**

A motor driven hard disk assembly for a low- profile, hard disk drive, is mounted upon a base structure (5a) of non-magnetic material. The disk motor (10) is a direct current motor having a salient pole stator (11) mounted on concentric annuli (5a3,5a4) on the innerface (5a1) of the base structure (5a5). A disk motor spindle (5a5) projects from the base structure (5a) at the center of the concentric annuli (5a3,5a4). An umbrella shaped disk motor rotor (12), of magnetic flux conducting material, is mounted for rotation on the disk motor spindle (5a) by an axial bearing pair (12b). The base structure (5a) has an annular recess (5a6) about the outer annulus (5a4) of the concentric annuli (5a3,5a4). The disk motor rotor (12) has a peripheral, depending annular rim (12e), projecting into the annular recess (5a6). A ring (12f) of magnetizable material is supported within the umbrella shaped disk motor rotor (12) and is radially spot magnetized in equally circumferentially spaced locations greater in number than the number of salient poles (11 b). The ring (12f) encircles the ends of the salient poles (11 b) defining radial gaps therewith. A single disk (13) is secured to an annular planar face (12c) concentrically disposed of the motor rotor (12).

## Description

### Technical Field

This invention relates generally to small form factor hard disk drives and particularly to low profile hard disk assemblies, including the motor drives therefor, for use in applications such as laptop, palmtop and notebook types of computers or data processors.

### Background of the Invention

Portability of computers or processors has increased the use of such devices and has indicated a need for increased capacity in memory, built in or plug in, beyond that afforded by commonly used solid state memories, to permit the storage and accessing of user data during computing or data processing operations. The conventional solid state memory, usually a random access memory (RAM) in the form of a plug in memory, called a PC Card, while affording a compact memory facility, in the range of sizes for such applications, for example, 54mm wide, 85.6mm long and 5mm thick, for interchangeable insertion into a laptop or a notebook type of processor, for example, lacks the storage capacity and addressability for useful user data, beyond that required for operating system and some computer applications, for example.

Rotating memories, such as disk drives, afford significantly greater storage capacities than the solid state memories, even in these small sizes, with existing recording techniques, but the mechanics of drives in such small sizes are challenging. Compressing a disk drive to fit within the covers, top and bottom, of a PC Card, for example, in the size range stated above, requires compressing the disk spindle and rotary actuator spindle structures to less than 5mm in thickness or depth. Clearances between a rotating disk and the moving rotary actuator arm structures, and the covers are in very small fractions of mm, requiring dimensionally stable structures for which parts must be manufactured with high precision and the design must provide precise indexing of parts in assembly, since space for tool insertions providing after assembly adjustments to achieve proper function does not exist. Also, after assembly adjustment attempts would likely destroy the hard drive.

### Summary of the Invention

A single disk, rotary actuator disk drive, which may be fitted into a PC Card and coupled to the electronics of a laptop or notebook type of computer or processor when inserted therein, by means of the standard PCMCIA type of connector for such applications, according to this invention, comprises a single disk, rotary actuator type of hard disk drive, in which, provision is made with a unique structural organization of parts, in limited space, for the precise disk position and axial alignment of parts, to achieve a mechanically functional disk drive at assembly.

The hard disk assembly comprises a base structure which is part of the mainframe of the hard disk drive. The base structure has a flat outer or bottom face and an innerface having recesses for clearing disk motor parts and projections on the innerface for supporting other motor parts, designed to maximize the average base structure thickness to provide structural integrity, both in configuration and in dimension in the environment of use.

The disk assembly comprises a salient pole, permanent magnet, direct current disk motor, in which the salient pole structure is mounted on the base structure, the disk motor rotor is journaled on a spindle on the base structure and the single disk is mounted directly on the disk motor rotor, forming an assembly of minimum axial dimension.

The disk motor spindle projects from the innerface of the base structure. A pair of concentric annuli are concentrically formed about the spindle in the base, defining a circular recess therebetween.

The salient pole stator comprises an inner ring from which the salient poles project radially outwardly. The inner ring of the salient pole structure seats upon the inner annulus of the pair of concentric annuli and the salient pole ends each seat upon the outer annulus of the pair of concentric annuli. The salient pole structure is secured to the concentric annuli by adhesive bonding. Each salient pole mounts a winding, each of which is disposed on its salient pole between the concentric annuli.

The disk motor rotor is of a flat umbrella shape, having a hub and an outer peripheral rim comprising a depending annulus. The hub has a concentric, axial, cylindrical bore. An axial bearing pair in the cylindrical bore rotatably mount the disk motor rotor on the disk motor spindle, in which position the depending rim annulus projects into a circular recess in the base structure, about the outer annulus of the pair of concentric annuli. The disk motor rotor is of a magnetic flux conducting material. A ring of magnetizable material is secured within the disk motor rotor at the innerface of the depending annulus. This ring of magnetizable material then circles the ends of the salient poles defining radial gaps therebetween. The ring is spot magnetized in a radial direction in equally circumferentially spaced locations, the number of locations being greater than the number of salient stator poles.

The disk motor rotor has an annular, axial surface, concentrically disposed about the hub, to which the single disk is secured by means including adhesive bonding.

As an alternative to the radial gap, the bottom face of the ring may confront surfaces of the pole ends to form axial gaps therewith. In this axial gap configuration of the disk motor rotor the ring is spot magnetized in an axial direction.

### Brief Description of the Drawings

The invention will be better understood by reference to the following specification when considered in conjunction with the accompanying drawings, in which:
Fig. 1 is a plan view of a hard disk drive embodying the principles of this invention, and
Fig. 2 is a sectional view of the hard disk assembly of the hard disk drive, taken in the section plane II-II of Fig. 1.

### Best Mode For Practicing The Invention

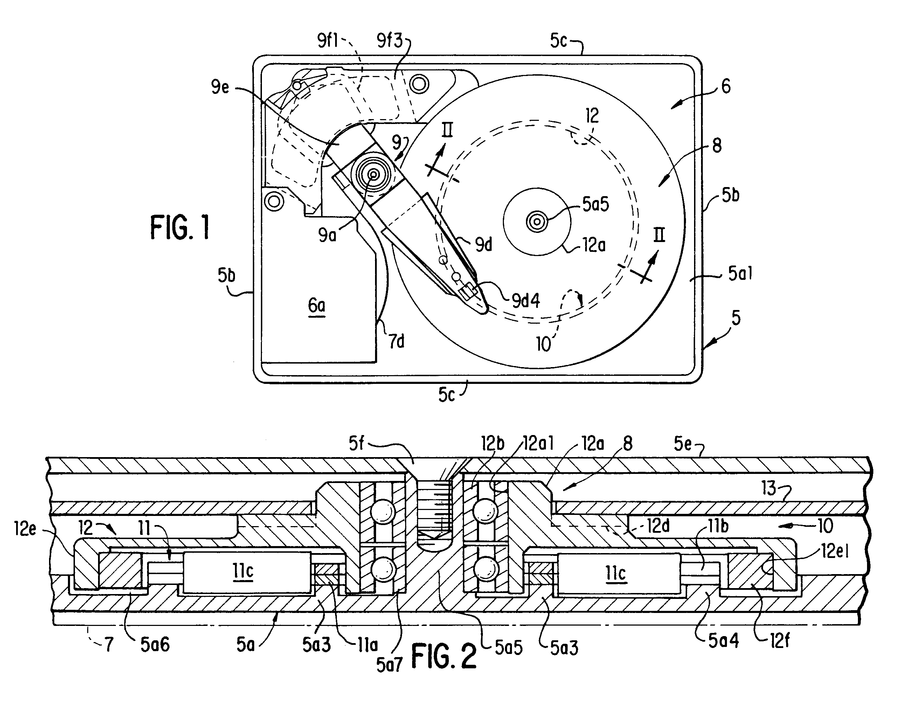

Figs. 1 and 2 illustrate, respectively, plan and sectional views of a small form factor (1.3 form factor), hard disk drive memory cassette, embodying the principles of this invention. These figures are drawn to a greatly enlarged scale, Fig. 2 being a further enlargement of Fig. 1, to permit the illustration of essential detail. The sectional view of Fig. 2 is directed to the disk assembly of the hard disk drive.

A main frame or base structure 5 of metal, such as aluminum, which is the backbone, i.e., the primary structural member of the disk drive structure, is preferably a single piece of milled or cast metal which is precision machined, having a base plate 5a, end walls 5b, and side walls 5c. The end walls 5b and the side walls 5c, being an integral part of the base plate 5a, increase the stiffness of the main frame 5 with respect to bending and twisting. This, together with careful recessing of the inner surface 5a1 of the base plate 5a, to clear parts of the drive, to generally maintain an overall maximum base plate thickness, provides a support which is stable, both in configuration and in dimension, in a degree suitable for a rotary actuator type of hard disk drive 6. The base plate 5a has a flat bottom or outer surface 5a2 to which a printed circuit board 7 may be attached. The printed circuit board is shown in dot dash outline in Fig. 2. Where the disk drive is embodied in a PC Card, the printed circuit board 7 for the disk drive is preferably disposed upon the inner surface 5a1 of the base plate 5a beside the hard disk drive 6. A flat flexible electrical cable 7d connects the printed circuit board 7 to the hard disk drive 6 via a connector 6a, in the structure seen in Fig. 1. The printed circuit board conventionally comprises electronic systems and circuits, including a disk controller, providing a processing and control function for translating requests for reading or commands for writing from an electronic digital processor or a host computer, depending upon the application, into track and track sector indications, providing controls for track seeking and track following, and, during track following, providing sector identity and timing controls for read/write modes of operation.

A cover 5e is secured, as by adhesive bonding, to the upper edges of the end walls 5b and the side walls 5c of the base or mainframe 5 to seal and further stiffen the assembly.

The hard disk drive 6 comprises a hard disk assembly 8 and a rotary actuator assembly 9. The rotary actuator is journaled on a spindle 9a and comprises two arm structures 9d, one above and one below the hard disk assembly 8. Each arm structure mounts a magnetic head 9d4 at its distal end. Only the upper arm structure 9d is seen in the drawings. An actuator motor arm 9e mounts a coil 9fl of an axial gap actuator motor. The electromagnetic field of the coil 9f1 links a permanent magnet field of a permanent magnet structure 9f3 on the base 5. As is known, the coil is reversibly en- gerized to move the rotary actuator. The hard disk assembly, which is the subject of this invention is described herebelow.

The hard disk assembly 8, comprises a salient pole, direct current disk motor 10 which has a salient pole stator 11 and an umbrella shape, disk motor rotor 12. A hard disk 13 is secured to the disk motor rotor 12.

The salient pole stator 11 is a laminated assembly of thin, metal, flux conducting plates, mounted directly on the base structure. This base structure mount comprises, a pair of concentric annuli 5a3 and 5a4 on the innerface 5a1 of the base structure. These are annuli concentrically disposed about a disk motor spindle 5a5. The salient pole stator 11 is a laminated assembly of thin, metal, flux conducting plates comprising a circular center section 11 a and individual, radially disposed, salient poles 11 b. The circular center section 11 a of the salient pole stator 11 seats upon and is secured to the inner annulus 5a3 and the end of each of the salient poles 11 seats upon and is secured to the outer annulus 5a4. Each salient pole 11 b is provided with a winding 11 which is disposed on its salient pole between the concentric annuli 5a3 and 5a4. The bottom side of each winding projects into the circular recess between the concentric annuli. The salient pole stator is preferably adhesively bonded to the concentric annuli.

The umbrella shaped disk motor rotor 12 has a hub 12a which is journaled by an axial bearing pair 12b on the spindle 5a5, shown in the preferred embodiment as an integral part of the base plate 5a. The hub 12a has a concentric, cylindrical bore 12a1 in which the bearings are secured. The bearings are also secured to the motor spindle 5a5. A flat annular, axial face 12c concentrically formed upon the hub 12b, provides a supporting surface for the hard disk 13. The hard disk 13 may be directly adhesively bonded to the axial face 12c of the rotor as shown, however, improved flatness in mounting the disk is achieved and is preferred by employing a spacer 12d (shown in dot-dash outline only) of superior flatness to that achievable on the axial face 12c, achieved by lapping of the spacer. The spacer 12d, if used, is adhesively bonded to the hard disk 13 and the axial face 12c. The disk motor rotor 12 has a peripheral, depending annular rim 12e, the bottom edge of which projects into an annular recess 5a6 in the inner surface 5a1 of the base plate 5a, concentrically disposed about the outer annulus 5a4 in the base structure 5.

The disk motor rotor 12 is of a magnetic flux conducting material, such as steel. This depending annular rim 12e has mounted on its inner peripheral face 12e1 a ring 12f of magnetic material which is spot magnetized in equally circumferentially spaced locations, greater in number than the number of salient stator poles 11 b. The ring 12f encircles the pole ends of the salient poles 11 b providing radial gaps therebetween. Spot magnetization of the ring 12f is radial, alternately north- south, south-north. The magnetic flux conducting rotor 12 provides the outer magnetic circuit for a flux return path to the magnetized spots of the ring 12f and to the salient poles of the motor. The windings 11 are conventionally energized to rotate the rotor 12 at a selected constant speed.

While a radial gap in the motor has been shown, an axial motor gap is also feasible by deflecting the stator pole ends into the recess 5a6 beneath the ring 12f.

The distal end of the disk motor spindle 5a5, contacts the cover 5e and is secured to the cover by a screw 5f. This provides additional support for the cover with respect to squeezing and handling, particularly in the PC Card application, as well as providing a secure anchor for the distal end of the disk motor spindle 5a to obviate disk wobble during rotation.

In the presently contemplated best mode for practicing this invention the hard disk drive is of a 1.3 form factor. The overall thickness of the assembly, between the top and bottom outer faces is 5 mm, which is the thickness of one type of PC Card. In the PC Card application, the top cover 5e is of aluminum and is about 0.5 mm thick. The thickness of the base structure 5 at the bottom of the recess 5a6 is about 0.5 mm. The disk 13 is of ceramic material and is about 0.381 mm thick. The clearance between the bottom surface of the disk 13 and the disk motor rotor 12 is about 0.75 mm. The clearance between the top surface of the disk 13 and the inner surface of the top cover 5e is about 0.9 mm. The dimensions 0.75 mm and 0.9 mm clear the load beam 9d and the transducer 9d4 of each arm structure 9d. The thickness of the depending annular rim 12e of the disk motor rotor 12 is about 1.7 mm, leaving a clearance of about 0.25 mm between the bottom of the depending annular rim 12e of the disk motor rotor 12 and the face of the recess 5a6 thereat.

Precision in assembly is achievedby providing a design in which the parts provide indexing in assembly to obviate the need for mechanical adjustments after assembly. Thus, in one assembly process, the axial bearing pair 12b are fitted in the bore of the disk motor rotor 12 with their ends flush with the respective axial ends of the hub of the disk motor rotor 12. These bearings may be pressed into the bore from opposite ends of the hub or may be adhesively bonded in the bore. A shoulder 5a7 at the base of the spindle 5a5 seats the bottom end of the inner race of the bottom bearing 12b of the axial bearing pair 12b, to precisely axially position the disk 13 with respect to the actuator arm structure 9. If the bearings 12 b are to be press fitted on the spindle 5a5, a shim (not shown) is needed between the confronting ends of the inner races of the axial bearing pair 12b to provide a solid mechanical bearing between the pair of bearings. Presently, adhesive bonding of the inner bearing races to the spindle 5a5 and the outer bearing races to the wall of the bore in the hub of the disk motor rotor 12 is preferred.

## Claims

1. A low profile, motor powered hard disk assembly for a disk drive comprising,
a. a base structure (5) of non-magnetic material having a substantially flat outerface and an innerface (5a1);
b. a disk motor spindle (5a5) projecting from said innerface (5a1);
c. outer and inner concentric annuli (5a4,5a3) projecting from said innerface (5a1) in positions concentrically disposed of said spindle (5a5);
d. a salient pole disk motor stator (11) of magnetic flux conducting material having an inner continuous ring portion (11 a) concentrically secured upon the inner annulus (5a3) of said concentric annuli (5a3,5a4) and having equally circumferentially spaced radially projecting salient poles (11 b), the pole ends of which are secured to the outer annulus (5a4) of said concentric annuli (5a3,5a4);
e. a winding (11 c) on each salient pole (11 b) disposed between said inner and outer annuli (5a3,5a4);
f. an umbrella shaped, disk motor rotor (12) of magnetic flux conducting material;
g. an axially spaced bearing pair (12b), concentrically and rotatably mounting said disk motor rotor (12) on said disk motor spindle (5a5);
h. a circular recess (5a6) in said innerface (5a1) around the outer annulus (5a4) of said concentric annuli (5a3,5a4);
i. said disk motor rotor (12) having a peripheral, depending annular rim (12e) projecting into said circular recess (5a6);
j. a ring (12f) of magnetizable material supported within said disk motor rotor at said depending annular rim (12e), said ring (12) being spot magnetized at equally circumferentially spaced locations greater in number than the number of said salient poles (11 b), and spaced from said pole ends, and k. means securing a single disk (13) to said disk motor rotor.

2. The invention according to claim 1, in which: a. said means securing a single disk (13) to said disk motor rotor (12) comprises a bonding adhesive.

3. The invention according to claims 1 or 2, in which:
a. said disk motor rotor (12) comprises a hub (12a) having a cylindrical, concentric axial opening (12a1);
b. said axially spaced bearing pair (12b) being secured within said cylindrical axial opening (llal) and secured to said disk motor spindle;
c. said disk motor rotor (12) having an annular axial face (12c) concentrically disposed of said hub;
d. said disk (13) having a central opening fitted about said hub, and
e. an adhesive bonding agent bonding said disk (13) to said annular axial face (12c) of said disk motor rotor (12).

4. The invention according to any one of the preceding claims comprising a cover sealed to said base structure.

5. The invention according to any one of the preceding claims, in which:
a. said base structure (5a) comprises sidewalls (5c,5d) and endwalls (5b), and
b. a cover (5e) sealed to the sidewalls-(5c,5d) and endwalls (5b).

6. The invention according to claim 5, further comprising means (5f) securing said cover to said disk motor spindle (5a5).

7. The invention according to any one of the preceding claims in which said disk motor spindle (5a5) is integral with said base structure (5a).

8. The invention according to any one of the preceding claims in which said ring (12f) of magnetizable material encircles said pole ends defining a radial air gap therebetween, and said ring (12f) being spot magnetized in a radial direction.
